# EUROPEAN PATENT SPECIFICATION

(11) **EP 1 807 369 B1**
(45) Date of publication and mention of the grant of the patent: **17.10.2018**
(21) Application number: 06765071.3
(22) Date of filing: 21.07.2006
(51) Int. Cl.: C03C 4/00, C08K 3/40

(54) **USE OF A PARTICULATE GLASS CULLET AS ANTI-BLOCKING PIGMENT**
VERWENDUNG VON PARTIKELFÖRMIGEM BRUCHGLAS ALS ANTIBLOCKPIGMENT
UTILISATION DE PARTICULES DE VERRE RECYCLE EN TANT QUE PIGMENT ANTI-BLOQUANT

(30) Priority: 22.07.2005 GB 0515088; 05.05.2006 GB 0608938
(43) Date of publication of application: 18.07.2007
(73) Proprietor: Imerys Minerals Limited, Par. Cornwall PL24 2SQ (GB)
(72) Inventor: HART, Jarrod, R., Truro, Cornwall TR1 3EN (GB); HOOPER, Jeremy, Luxulyan, Bodmin, Cornwall PL30 5ED (GB); SKUSE, David Robert, Truro, Cornwall TR1 1BH (GB); PALM, Scott, K., Alpharetta, GA 30004 (US); TSAI, Daniel, Alpharetta, GA 30022 (US)
(74) Representative: Rushton, David John
(86) International application number: PCT/GB2006/002742
(87) International publication number: WO 2007/010280

(56) References cited:
- DE-C1- 4 100 604
- DATABASE WPI Week 200377 Derwent Publications Ltd., London, GB; AN 2003-821295 XP002404697 & JP 2003 253141 A (MIZUSAWA CHEM IND CO LTD) 10 September 2003 (2003-09-10)

## Description

The present invention relates to the use of a particulate glass cullet in a polymer composition as an anti-blocking pigment.

### Background of the Invention

It is well known to incorporate particulate inorganic materials, such as ground inorganic minerals into polymer compositions for a variety of purposes. One widespread use of such particulate materials is as a reinforcing or functional filler for a polymer composition; the filler may provide the polymer composition with a variety of properties, including for example abrasion resistance, and electrical resistance. In addition, the filler may impart various desirable optical properties to the composition, such as colour and brightness, and in such circumstances is referred to in the art as a pigment. Particulate materials may also be added to impart other properties to the polymer composition. For example, natural silica and talc are commonly added as antiblocking agents to polymer compositions which are to be formed into polymer film. Polymer compositions such as sealants, mastics, adhesives and the like, all also require the addition of particulate additives to adjust and improve their properties.

Inorganic particulate materials can also be incorporated into paints and varnishes, coatings, such as automotive clear coats and gel coats, and cosmetic and pharmaceutical preparations. These particulate materials are also useful as rheology modifiers in polymer compositions, and in dental compositions for the purpose of improving abrasion resistance.

Certain hard inorganic materials in particulate form, such as quartz, also find use as abrasive particles in abrasive compositions and articles.

One important factor in the production of compositions and articles which incorporate a particulate material is the cost of the particulate material. Whilst inexpensive filler materials are available, it would be desirable to provide further inexpensive particulate materials having desirable properties across a variety of end uses.

Glass which has been finely ground is known for a variety of speciality end uses, for example as a bioactive material which may be used in bone regeneration, and in dental uses. Typical starting materials for the production of such particulate glasses are high purity materials such as high silica porous glass (US-A-4052010) and borosilicate glass (US-A-4547531 and US-A-5340776). Such high purity materials are expensive to produce and are not practical materials for production in the high volumes which are required of industrial particulate materials to be used as bulk filler and pigments in polymer compositions.

JP-A-2003253141 discloses the use of a glass powder as antiblocking agent in polymer compositions.

The present inventors have surprisingly found that a glass cullet may be ground using grinding procedures to obtain a particulate material which has a number of desirable optical and physical properties which enable its use as a filler or pigment in a variety of polymer compositions

Thus the present invention provides an economical route to a particulate glass with desirable properties, making use of an inexpensive starting material, and which is processed using grinding technology.

### Summary of the Invention

According to the present invention, there is provided the use of a particulate glass cullet having a d50 of less than 7 microns and a brightness greater than 80% in a polymer composition as an anti-blocking pigment, wherein the glass cullet is a soda-lime glass cullet comprising from 60-75 wt% silica, from 12 to 18 wt% soda and from 5 to 12 wt% lime, wherein brightness is defined as the percentage of light reflected by a body compared to that reflected by a perfectly reflecting diffuser measured at a nominal wavelength of 457 nm with a Datacolour Elrepho or similar instrument, and wherein the d50 is measured by sedimentation of the particles in a fully dispersed state in an aqueous medium using a SEDIGRAPH 5100 machine as supplied by Micromeritics Corporation, USA, or by other methods which give essentially the same result.

Also disclosed is a particulate glass cullet having a d₅₀ less than 4 *µ*m and a brightness greater than 80 %.

Also disclosed is a particulate glass cullet having a d₅₀ less than 3 *µ*m and a brightness greater than 80 %.

The fine particulate material used in the present invention has a high intrinsic brightness and may also have a low yellowness. These properties are surprising in view of the poor brightness and tint of the starting cullet material.

Also disclosed is a process for the preparation of particulate glass cullet which comprises grinding a glass cullet to a particle size distribution such that the d₅₀ is smaller than 7 *µ*m, and recovering a product having a brightness greater than 80 %.

Also disclosed is a process for the preparation of particulate glass cullet which comprises grinding a glass cullet to a particle size distribution such that the d₅₀ is smaller than 3 *µ*m, and recovering a product having a brightness greater than 80 %.

Also disclosed is a process for the preparation of particulate glass cullet which comprises grinding a coarse glass cullet to a particle size distribution such that the d₅₀ is smaller than 4 *µ*m, and recovering a particulate product having a brightness greater than 80 %.

As discussed in more detail below, it was not expected by the inventors that grinding a cullet to the degree of fineness specified above was possible.

The particulate glass cullet of the invention is used as an antiblocking agent. "Also disclosed are polymeric compositions which include the particulate cullet material of the invention, and articles produced from such compositions, such as polymer films.

The particulate material may also be used in paints and varnishes, coatings, such as clear coats as may be used in automotive applications; in cosmetics, pharmaceuticals and dental compositions; and as rheology modifiers.

### Brief Description of the Drawings

Figure 1 is an electron micrograph of a recycled clear container glass cullet which has been ground at an energy input of 350 kWh t⁻¹.
Figure 2 is the same material as Figure 1, but on a higher magnification.
Figures 3a to 3d are photographs of a plastic filled with the particulate glass cullet of the present invention and other commercially available fillers.
Figures 4a to 4j are microscope images showing the dispersion of the particulate cullet of the invention and other commercially available fillers in LLDPE masterbatch.
Figure 5 is a chart showing the blocking force of 7 *µ*m and 3 *µ*m cullet samples compounded into LLDPE (Linear Low Density Polyethylene) masterbatch.
Figure 6 is a chart showing the re-blocking force of 7 *µ*m and 3 *µ*m cullet samples compounded into LLDPE (Linear Low Density Polyethylene) masterbatch.
Figure 7 is a chart showing the film-to-film coefficient of friction of 7 *µ*m and 3 *µ*m cullet samples compounded into LLDPE (Linear Low Density Polyethylene) masterbatch.

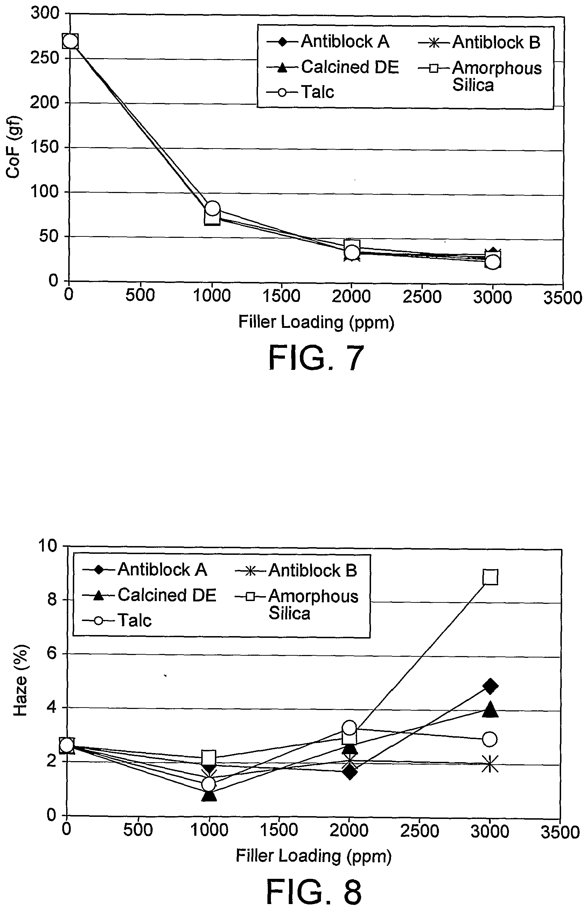

Figure 7 is a chart showing the haze of 7 *µ*m and 3 *µ*m cullet samples compounded into LLDPE (Linear Low Density Polyethylene) masterbatch.

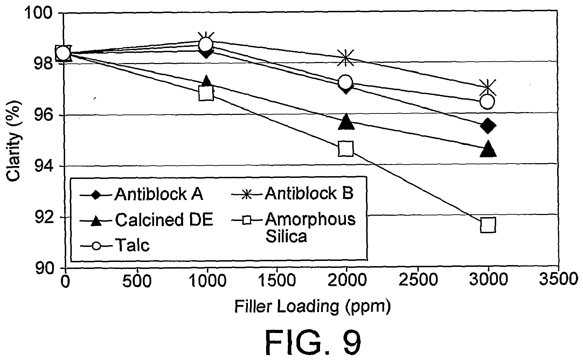

Figure 9 is a chart showing the clarity of 7 *µ*m and 3 *µ*m cullet samples compounded into LLDPE (Linear Low Density Polyethylene) masterbatch.

### Detailed description of the invention

As stated above, the present invention, in a broad aspect, relates to the use of a particulate glass cullet having a d50 of less than 7 microns and a brightness greater than 80% in a polymer composition as an anti-blocking pigment, wherein the glass cullet is a soda-lime glass cullet comprising from 60-75 wt% silica, from 12 to 18 wt% soda and from 5 to 12 wt% lime, wherein brightness is defined as the percentage of light reflected by a body compared to that reflected by a perfectly reflecting diffuser measured at a nominal wavelength of 457 nm with a Datacolour Elrepho or similar instrument, and wherein the d50 is measured by sedimentation of the particles in a fully dispersed state in an aqueous medium using a SEDIGRAPH 5100 machine as supplied by Micromeritics Corporation, USA, or by other methods which give essentially the same result.

In another broad product aspect, the disclosure relates to a particulate glass cullet which has a particle size distribution such that the d₅₀ is less than 4 *µ*m and which has a brightness of at least 80 %.

In a further broad aspect, the disclosure relates to a particulate glass cullet which has a particle size distribution such that the d₅₀ is less than 3 *µ*m and which has a brightness of at least 80 %.

The term "cullet" used herein refers to raw glass, broken glass from a cooled melt or scrap glass intended for recycling, and is generally plant generated or recycled from the market place. Included is any type of broken refuse glass, such as but not limited to container glass (e.g. recyclable glass jars or bottles), of all colours, uncoloured glass, tinted or untinted plate glass (e.g. window panes), ceramic glass (e.g. coffee mugs), flint glass and mixtures thereof. Derivatives of cullet are also included within the definition of this term, including remelted cullet and the like.

The cullet used in the present invention is a soda-lime glass cullet. Soda-lime cullet is the most common commercial glass and generally the least expensive to produce. Soda-lime glass is used primarily for bottles, jars and window glass and typically comprises from about 60-75 wt% silica, from 12 to 18 wt% soda and from 5 to 12 wt% lime. Typically, the refractive index of this material is of the order of 1.45 to 1.55.

These glasses may comprise other metal oxides such as alkali oxides (e.g. K₂O), alkali earth oxides (e.g. MgO and BaO), transition metal oxides (e.g. Fe₂O₃, TiO₂) and alumina (Al₂O₃).

The cullet utilised in the present invention will preferably have a boron oxide content of less than 5 wt.%. In container glass the alumina content is generally greater than 0.5 wt.%, and the MgO content is generally less than 2. In plate glass the alumina content is generally less than 0.5 wt.% and the MgO content is generally greater than 2 wt.%. The crystalline silica content of the cullet will typically be very low, such as less than 0.5wt% for example.

The value of *d*₅₀ for the fine particulate glass cullet according to one aspect of the invention is less than 7 *µ*m. The d₅₀ may, for example, be less than 3 *µ*m and typically greater than 0.25 *µ*m, such as for example greater than 0.5 *µ*m. The d₅₀ may, for example, be less than 2.5 *µ*m, and may be greater than 1 *µ*m. In embodiments of the invention, the d₅₀ may be less than 2 *µ*m, less than 1.5 *µ*m, less than 1.2 *µ*m, less than 1.1 *µ*m, or less than 1 *µ*m.

The top cut (also referred to as the d₉₀) of the finely ground cullet is preferably less than 10 *µ*m, for example less than 7.5 *µ*m, for example less than 5 *µ*m, for example less than 3 *µ*m. Fines content, that is the amount of particles smaller than 0.25 *µ*m, is typically less than about 10% by weight.

The term "d₅₀" used herein refers to the particle size value less than which there are 50% by weight of the particles. The term d₉₀ is the particle size value less than which there are 90% by weight of the particles.

All particle size values pertaining to the fine particulate cullet are specified as equivalent spherical diameters, and are measured by the well known conventional method employed in the art of sedimentation of the particles in a fully dispersed state in an aqueous medium using a SEDIGRAPH 5100 machine as supplied by Micromeritics Corporation, USA, or by other methods which give essentially the same result.

The particulate cullet may have a surface area, as measured using the BET nitrogen adsorption method, of less than about 20 m²/g, such as less than about 6 m²/g and preferably greater than about 0.25 m²/g, such as greater than about 1 m²/g, or greater than about 3 m²/g.

The particulate cullet may have an oil absorption greater ranging from about 10g/100g to about 100g/100g, such as for example ranging from 20g/100g to about 60g/100g, greater than about 30 g/100g, or greater than about 40g/100g. Oil absorption may be measured in accordance with ISO 787 Part 5.

The value of the brightness of the particulate glass cullet according to one aspect of the invention will be greater than 80 %. In embodiments of the invention, the brightness may be greater than 81 %, greater than 82 %, greater than 83 %, greater than 84 %, greater than 85 %, greater than 86 %, greater than 87 %, greater than 88 % greater than 89 %, greater than 90 %, greater than 91 %, or greater than 92 %.

According to another aspect of the invention, the glass cullet will have a *d*₅₀ of less than 4 *µ*m and a brightness greater than 80 %. In embodiments of this aspect of the invention, the brightness may be greater than 81 %, greater than 82 %, greater than 83 %, greater than 84 %, greater than 85 %, greater than 86 %, greater than 87 %, greater than 88 % greater than 89 %, greater than 90 %, greater than 91 %, greater than 92 %, or greater than 93 %.

For the purpose of the present application "brightness" is defined as the percentage of light reflected by a body compared to that reflected by a perfectly reflecting diffuser measured at a nominal wavelength of 457 nm with a Datacolour Elrepho or similar instrument such as the Carl Zeiss photoelectric reflection photometer. Yellowness is the difference between the percentage of light reflected by a body compared to that reflected by a perfectly reflecting diffuser measured at a nominal wavelength of 571 nm and the brightness value described above. Details of procedures for measuring brightness are set out in the appendix below.

The value of the tint (b* value) of the particulate glass cullet according to the product aspects of the invention is less than about 1.5, but typically greater than about 0.10. In embodiments of the invention, the tint may be less than about 1.3, less than about 1.2, less than about 1.1, less than about 1.0.

According to one aspect of the present invention, the particulate cullet is prepared by a process in which a coarse cullet is ground to the desired particle size distribution having a d₅₀ of less than 7 *µ*m and recovering a particulate product having a brightness greater than 80 %.. In an embodiment of the invention, the coarse cullet is ground to the desired particle size distribution having a d₅₀ of less than 3 *µ*m. In further embodiments of the invention, the coarse cullet comprises a silica glass, for example a soda-lime cullet.

According to another aspect of the present invention, the particulate cullet is prepared by a process in which a coarse cullet is ground to the desired particle size distribution having a d₅₀ of less than 4 *µ*m and recovering a particulate product having a brightness greater than 80 %.

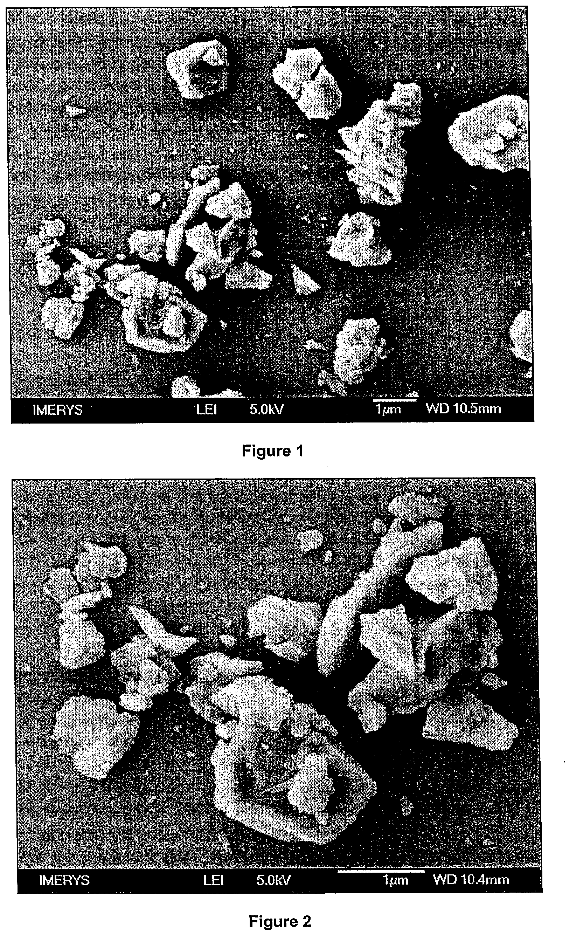

Any suitable known grinding procedure may be employed. Finely ground cullet obtained in this way has a fractured morphology as illustrated in Figures 1 and 2, and is characterized in that each particle has a series of randomly disposed, generally flat, cleavage surfaces.

In an embodiment of the invention, the final grinding step to the desired final particle size distribution is an attrition grinding stage.

The attrition grinding is preferably wet attrition grinding or media attrition grinding. The attrition grinding is preferably carried out in the presence of a suitable particulate grinding medium. The particulate grinding medium may be of a natural or a synthetic material. The grinding medium may comprise balls, beads or pellets of any hard mineral, ceramic or metallic material; such materials may include, for example, alumina, zirconia, zirconium, silicate, aluminium silicate or the mullite-rich material which is produced by calcining kaolinitic clay at a temperature in the range of from 1300°C to 1800°C. For example, in some embodiments a Carbolite™ grinding media is preferred. Alternatively, particles of natural sand of a suitable particle size may be used. Generally, the type of, and particle size of, grinding medium to be selected for use in the invention may be dependent on the properties, such as, e.g. the particle size and the chemical composition of the feed of cullet to be ground.

Alternatively, attrition grinding can be performed autogenously without the presence of grinding media. In autogenous grinding, the raw material to be ground acts as the grinding media. Autogenous mills are available for both wet and dry grinding.

In the case of wet attrition grinding stage, the coarse cullet is preferably ground in an aqueous suspension in the presence of a grinding medium. In such a suspension, the coarse cullet may preferably be present in an amount of from 5% to 85% by weight of the suspension; more preferably in an amount of from 20% to 80% by weight of the suspension. Most preferably, the cullet may be present in an amount of about 30% to 75% by weight of the suspension.

The energy input in a typical wet attrition grinding process to obtain the desired particulate soda-lime glass cullet according to the present invention may typically be equal or greater than about 110 kWht⁻¹. The upper limit of energy input is generally difficult to specify, as the particle size will generally continue to reduce, albeit progressively more slowly, as the energy input is increased. Generally speaking, it should not be necessary for the energy input to exceed about 2000 kWht⁻¹, in order to produce useful fine particulate soda-lime cullet according to the present invention. Preferably, the final energy input should not exceed about 350 kWht⁻¹. Aliquots of slurry may be withdrawn at, for example, 110, 190 and 260 kWht⁻¹ for analysis

The suspension of solid material to be ground may be of a relatively high viscosity, in which case a suitable dispersing agent may preferably be added to the suspension prior to comminution by the method of the invention. The dispersing agent may be, for example, a water soluble condensed phosphate, a water soluble salt of a polysilicic acid or a polyelectrolyte, for example a water soluble salt of a poly(acrylic acid) or of a poly(methacrylic acid) having a number average molecular weight not greater than 80,000. The amount of the dispersing agent used would generally be in the range of from 0.1 to 2.0% by weight, based on the weight of the dry particulate solid material. The suspension may suitably be ground at a temperature in the range of from 4°C to 100°C.

The grinding is continued until the desired particle diameter is achieved, after which the particulate material may be dried. Drying can be accomplished via use of spray driers, flash dryers, drum dryers, shelf or hearth dryers, freeze driers and drying mills, or some combination thereof.

The final attrition grinding may be preceded by a dry grinding step in which a coarse cullet is dry ground to an intermediate particle size greater than the final desired particle size. For example, in this preliminary coarse grinding step, the cullet may be ground such that it has a particle size distribution in respect of which the d₅₀ is less than about 20 µm. This dry, coarse grinding step may, for example, be carried out by dry ball-milling with a ceramic grinding media. Alternatively, grinding may be by high-compression roller, fluid energy mill (also known as jet mill) or hammer mill.

The finding that the raw cullet can be ground down to such fine particle size using wet grinding is unexpected. Glass is an amorphous material, and most of the size reduction during grinding occurs due to fracturing. As the material is ground to very small sizes, grinding becomes difficult as the number and size of the imperfections usually responsible for initiating fracturing decreases. Conventionally, it has been thought very difficult to reduce the particle size of glass by grinding when approaching the size of particle of interest in the present application. However, it has been found that it is possible to produce fine particulate cullet having good light scattering properties and thus a high brightness value, by grinding raw cullet.

The coarse material for the dry grinding step may itself be provided by crushing a raw soda-lime cullet using well known procedures. For example, crushing may be performed using jaw-crushing, for example to reduce the size of the glass fragments to less than about 2 mm.

Either before, or at some stage of, the crushing and grinding process, the cullet is preferably washed free of fine debris which might otherwise contribute to poor brightness and tint. Typically, this washing is carried out on the shards of raw cullet using a washing medium comprising water. The washing step may comprise cleaning the shards of raw cullet with a solvent, such as an organic solvent, an acid, a base, or the like.

A number of additional beneficiation steps may be used to improve brightness and tint. For example, during the crushing or grinding process, the glass cullet may be subjected to bleaching, leaching, magnetic separation, classification, froth flotation, and the like.

As discussed above, care must be taken to avoid contact with metallic equipment during the grinding stage. For this reason, attrition grinding should preferable be carried out in a non-metallic vessel, such as a polyurethane lined pot, using non-metallic impellers, such as polyurethane impellers.

The fine, particulate cullet material is used as an anti-blocking pigment. In general, the particulate material can be used in applications in which silica is commonly used. For example, in compositions comprising polyethylene or polypropylene, silicone sealants and rubbers, nylon, and natural and SBR rubbers (a synthetic copolymer of styrene and butadiene). The particulate material may also be used in coating applications, such as in paint (for example polyester based industrial paints), varnish, clear coat or gel coat applications. Where a clear glass cullet is used, the filler/functional additive has the advantage that it is transparent. Thus, the particulate cullet material may be used as an additive in automotive clear coats to provide a specific property to the coat. It is also nonconductive and so can be added to electrically insulating polymer materials, such as sealants, adhesives and mastics.

The material may be used in cosmetic applications, pharmaceutical compositions, and in dental applications, for example as a dental filler or abrasive in dental formulations.

When used as a filler material, the particulate cullet of the invention may be used at loadings typical in the art, ranging for example from about 500 ppm to about 90wt%, and may be incorporated in a manner known per se.

The particulate cullet may also be used in abrasive compositions, such as for example dental abrasive compositions.

The invention will now be illustrated, by reference to the following non-limiting examples.

### Examples

### Example 1

In this example, recycled glass samples were used as follows:
- A: A ground glass
- B: An untinted plate glass
- C: A recycled clear glass (container glass)
- D: A recycled clear glass
- E: A recycled mixed colour glass
- F: A recycled green glass (container glass)
- G: A recycled clear glass

A mineralogical analysis of coarse ground samples of these materials was carried out using X-ray powder diffraction. The results are shown in Table 1 below.

**Table 1**

| **Sample** | **Quartz (wt.%)** | **Cristobalite (wt.%)** | **Amorphous (wt.%)** |
|---|---|---|---|
| A | 0 | 0 | 100 |
| B | 0 | 0 | 100 |
| C | 0 | 0 | 100 |
| D | 0 | 0 | 100 |
| E | 0 | 0 | 100 |
| F | <0.5 | 0 | 100 |
| G | <0.5 | 0 | 100 |

A chemical analysis of the samples was undertaken using X-ray Fluorescence Spectroscopy. The results are shown in the Table 2 below.

**Table 2**

| **Sample** | **Al₂O₃ wt.%** | **SiO₂ wt.%** | **FB₂O₃ wt.%** | **TiO₂ wt.%** | **K₂O wt.%** | **CaO wt.%** | **MgO wt.%** | **Na₂O wt.%** | **L.O.I. wt.%** |
|---|---|---|---|---|---|---|---|---|---|
| A | 0.20 | 70.1 | 0.18 | 0.06 | 0.06 | 8.13 | 4.62 | 16.57 | 0.09 |
| B | 0.10 | 70.0 | 0.13 | 0.01 | 0.03 | 8.35 | 4.63 | 16.65 | 0.15 |
| C | 1.3 | 70.1 | 0.09 | 0.03 | 0.52 | 10.24 | 1.55 | 15.78 | 0.37 |
| D | 1.4 | 69.4 | 0.09 | 0.06 | 0.44 | 10.91 | 0.71 | 15.97 | 1.05 |
| E | 1.4 | 70.9 | 0.11 | 0.04 | 0.5 | 10.1 | 0.78 | 16.2 | 0.02 |
| F | 1.7 | 70.0 | 0.33 | 0.06 | 0.67 | 10.43 | 1.29 | 15.42 | 0.14 |
| G | 1.4 | 70.6 | 0.12 | 0.07 | 0.54 | 10.14 | 1.49 | 15.52 | 0.18 |

Cullet samples were initially jaw crushed using an agate pulverising mill to reduce the particle size to nominally less than 100 µm, typically giving ∼30 wt.% smaller than 10 µm. Each sample was then fine ground by wet attrition using carbolite grinding media (grade 16/10) in a stirred, polyurethane pot, with a polyurethane coated impeller. Typically 500 g of the coarse ground material was ground at -60 wt.% solids with a dispersant dose of 1.1 wt.% sodium polyacrylate and a final energy input of 350 kWh t⁻¹. Aliquots of slurry were periodically withdrawn at 110, 190 and 260 kWh t⁻¹. Optical properties for the wet attrition ground samples are shown in Table 3 below. Particle size data for the wet attrition ground samples are shown in Table 4.

**Table 3**

| **Sample Ref.** | **Energy Input (kWh t⁻¹**) | **Brightness (%)** | **L*** | **B* (tint)** |
|---|---|---|---|---|
| B | 110 | 90.7 | 96.6 | 0.68 |
| | 190 | 92.0 | 97.1 | 0.53 |
| | 260 | 91.5 | 96.9 | 0.65 |
| | 350 | 92.9 | 97.3 | 0.34 |
| C | 110 | 90.4 | 96.5 | 0.6 |
| | 190 | 91.7 | 96.9 | 0.31 |
| | 260 | 92.2 | 97.0 | 0.25 |
| | 350 | 92.6 | 97.1 | 0.14 |
| E | 110 | 88.8 | 96.1 | 1.1 |
| | 190 | 89.7 | 96.3 | 0.9 |
| | 260 | 90.5 | 96.6 | 0.73 |
| | 350 | 91.1 | 96.7 | 0.6 |
| F | 110 | 85.0 | 95.4 | 2.58 |
| | 190 | 83.0 | 94.9 | 3.19 |
| | 260 | 85.3 | 95.2 | 2.13 |
| | 350 | 86.2 | 95.5 | 1.95 |
| G (unwashed) | 110 | 84.3 | 94.6 | 1.89 |
| | 190 | 86.6 | 95.3 | 1.5 |
| | 260 | 87.7 | 95.7 | 1.26 |
| | 350 | 88.5 | 95.9 | 1.09 |
| G (water washed) | 110 | 91.6 | 97.2 | 1.13 |
| | 190 | 92.8 | 97.6 | 0.82 |
| | 260 | 93.0 | 97.6 | 0.77 |
| | 350 | 92.6 | 97.4 | 0.72 |

**Table 4**

| **Sample** | **Energy (kWh/t)** | **>10µm** | **>5µm** | **<2pm** | **<1µm** | **<.5pm** | **<0.25µm** | **<0.1µm** | **d₁₀ (µm)** | **d₅₀ (µm)** | **d₉₀ (µm)** |
|---|---|---|---|---|---|---|---|---|---|---|---|
| B | 110 | 9.3 | 38.4 | 25.4 | 11.4 | 5.7 | 3.3 | 2.4 | 0.9 | 3.9 | 9.8 |
| | 190 | 1.1 | 14.6 | 39.6 | 18.4 | 8.8 | 4.4 | 2.1 | 0.6 | 2.5 | 5.6 |
| | 260 | 0.1 | 4.8 | 58.0 | 31.2 | 15.0 | 8.4 | 6.4 | 0.3 | 1.6 | 4.1 |
| | 350 | 0.8 | 2.1 | 73.0 | 41.6 | 24.0 | 18.4 | 15.9 | NA | 1.2 | 3.0 |
| C | 110 | 10.7 | 40.7 | 25.1 | 11.5 | 5.5 | 3.8 | 2.9 | 0.8 | 4.1 | 10.3 |
| | 190 | 2.2 | 21.0 | 35.5 | 16.4 | 7.8 | 4.5 | 3.2 | 0.6 | 2.9 | 6.5 |
| | 260 | 0.9 | 7.6 | 48.5 | 23.1 | 10.1 | 5.1 | 2.6 | 0.5 | 2.1 | 4.6 |
| | 350 | 0.6 | 2.0 | 64.4 | 32.4 | 14.1 | 7.1 | 5.1 | 0.4 | 1.5 | 3.4 |
| E | 110 | 3.7 | 23.7 | 34.9 | 16.8 | 7.4 | 4.5 | 4.9 | 0.7 | 2.9 | 7.2 |
| | 190 | 2.4 | 13.3 | 42.9 | 21.4 | 9.0 | 5.7 | 4.7 | 0.5 | 2.4 | 5.5 |
| | 260 | 0.3 | 4.1 | 57.9 | 28.9 | 13.2 | 6.3 | 5.2 | 0.4 | 1.7 | 3.9 |
| | 350 | 0.3 | 1.3 | 71.1 | 35.7 | 15.2 | 7.0 | 5.4 | 0.4 | 1.4 | 3.0 |
| F | 110 | - | - | - | - | - | - | - | - | - | - |
| | 190 | 1.6 | 10.9 | 44.0 | 18.3 | 7.6 | 4.2 | 1.2 | 0.6 | 2.3 | 5.2 |
| | 260 | 1.5 | 5.9 | 56.9 | 27.6 | 11.2 | 5.4 | 0 | 0.5 | 1.7 | 4.2 |
| | 350 | 0.9 | 3.1 | 79.1 | 47.7 | 20.6 | 9.9 | 4.7 | 0.3 | 1.0 | 2.9 |
| G (unwashed) | 110 | 12.5 | 40.6 | 22.6 | 9.5 | 4.0 | 2.4 | 2.1 | 1.0 | 4.1 | 11.1 |
| | 190 | 3.5 | 21.5 | 35.3 | 16.0 | 6.2 | 4.1 | 3.8 | 0.7 | 2.9 | 6.7 |
| | 260 | 1.2 | 7.8 | 55.7 | 26.6 | 10.7 | 5.4 | 4.3 | 0.5 | 1.8 | 4.6 |
| | 350 | 1.4 | 4.6 | 68.2 | 40.1 | 17.5 | 9.1 | 6.3 | 0.3 | 1.3 | 3.8 |
| G (water washed) | 110 | 13.2 | 41.5 | 23.2 | 10.8 | 5.0 | 2.5 | 1.9 | 0.9 | 4.2 | 11.4 |
| | 190 | 4.3 | 20.2 | 34.6 | 15.5 | 6.1 | 3.3 | 0.1 | 0.7 | 2.9 | 6.7 |
| | 260 | 2.0 | 6.9 | 54.5 | 27.3 | 11.2 | 4.9 | 2.0 | 0.5 | 1.8 | 4.4 |
| | 350 | 1.2 | 3.4 | 60.9 | 30.0 | 12.0 | 5.3 | 2.4 | 0.4 | 1.6 | 3.7 |

The results show that the process of the present invention consistently gives products with a particle size range of 1-3 um, high brightness values (91-93 %) and low tint (b values as low as 0.14, but typically ∼0.7). This range of particle size products has been achieved with a maximum energy input of 350 kWh t⁻¹.

### Example 2

Three samples of glass cullet (recycled clear container glass) were finely ground to d₅₀ values of about 7 *µ*m, 3 *µ*m and 1.5 *µ*m respectively, and subjected to a chemical analysis and a particle size analysis. Equivalent data is also provided for a number of commercially available antiblocking agents; Celite 263LD (made from calcined diatomaceous earth and supplied by 'World Minerals'), Sylobloc 45 (an amorphous silica manufacture by 'Grace Division'), P200R (a calcined clay manufactured by 'Imerys Minerals Ltd') and Polybloc (a talc anitblock supplied by 'Speciality Minerals Inc.').

The chemical analysis of the samples was undertaken using X-ray Fluorescence Spectroscopy. The results are shown in the Table 5 below. The glass cullet has a typical composition for soda-lime glass.

**Table 5**

| Sample | Al₂O₃ wt. % | SiO₂ wt. % | K₂O wt. % | Fe₂O₃ wt. % | TiO₂ wt. % | CaO wt. % | MgO wt. % | Na₂O wt. % | LOI |
|---|---|---|---|---|---|---|---|---|---|
| 7µm Cullet | 1.7 | 71.0 | 0.56 | 0.12 | 0.05 | 10.65 | 1.53 | 14.24 | 0.18 |
| 3µm Cullet | 1.6 | 70.8 | 0.54 | 0.11 | 0.04 | 10.36 | 1.52 | 14.81 | 0.18 |
| 1.5µm Cullet | 1.5 | 70.7 | 0.53 | 0.12 | 0.06 | 10.29 | 1.49 | 15.14 | 0.18 |
| Calcined DE | 0.5 | 92.2 | 0.08 | 0.25 | 0.05 | 5.25 | 0.39 | 1.08 | 0.24 |
| Amorphous Silica | 0.2 | 94.0 | <0.01 | 0.02 | 0.03 | 0.04 | 0.03 | 0.15 | 5.59 |
| Calcined Clay | 41.0 | 55.5 | 1.95 | 0.65 | 0.06 | 0.05 | 0.26 | 0.15 | 0.41 |
| Talc | 7.2 | 72.3 | 2.85 | 0.884 | 0.01 | 0.88 | 11.3 | 1.16 | 2.98 |

Particle size (measured by CILAS), surface area and Hegmann dispersability data for the ground samples are shown in Table 6. Sylobloc has an exceptionally high surface area, and it may be that an aggregate size was measured and so the fundamental particle size is much smaller than that measured by CILAS.

**Table 6**

| Sample | %< 10µm | %< 5µm | %< 2µm | %< 1µm | %< 0.5µm) | d₉₀ (µm) | d₅₀ (µm) | SA^{a}) m²/g | Hegman (µm) |
|---|---|---|---|---|---|---|---|---|---|
| 7µm Cullet | 26.5 | 33.8 | 12.4 | 3.6 | 0.8 | 13.1 | 6.9 | 0.4 | 58 |
| 3µm Cullet | 91.3 | 71.1 | 33.7 | 11.3 | 3.2 | 9.8 | 3.0 | 3.2 | 96 |
| 1.5µm Cullet | 99.6 | 94.6 | 62.7 | 20.8 | 3.8 | 3.7 | 1.6 | 5.7 | 130 |
| Calcined DE | 37.7 | 16.6 | 6.6 | 2.2 | 0.3 | | 12.5 | 1.6 | 45 |
| Amorphous Silica | 99.8 | 60.0 | 8.1 | 0.2 | 0.2 | | 4.5 | 398 | 10 |
| Calcined Clay | 91.6 | 71.3 | 33.8 | 12.5 | 3.7 | | 3.0 | 8.3 | 40 |
| Talc | 88.2 | 62.7 | 27.9 | 10.5 | 3.2 | | 3.8 | 6.9 | 25 |

| | | | | | | | | | |
|---|---|---|---|---|---|---|---|---|---|
| ^{a)}surface area | | | | | | | | | |

Optical properties of the ground samples are shown in Table 7. The 3 *µ*m d₅₀ and 1.5 *µ*m d₅₀ cullet samples are as least as bright (L* value) as the commercial antiblock samples. The yellowness of each of the cullet samples is better than the commercial anitblock samples. The refractive index of the cullet is very similar to that of polyethylene, indicating that the cullet may give advantageous in reducing haze generated by scattering in a polymer comprising the cullet.

**Table 7**

| Sample | Powder Brightness | | | | Refr. Index |
|---|---|---|---|---|---|
| | Brightness (VIO) | L* | a* | b* | |
| 7µm Cullet | 77.6 | 90.9 | -0.07 | 0.48 | 1.515 |
| 3µm Cullet | 86.8 | 94.9 | -0.06 | 0.37 | 1.515 |
| 1.5µm Cullet | 89.4 | 95.9 | -0.09 | 0.38 | 1.515 |
| Calcined DE | 84.7 | 94.3 | -0.05 | 1.06 | 1.49 |
| Amorphous Silica | 85.2 | 95.2 | -0.46 | 2.37 | 1.47 |
| Calcined Clay | 88.9 | 96.9 | -0.10 | 2.70 | 1.52 |
| Talc | 87.6 | 95.7 | -0.14 | 1.37 | 1.55 |

The three ground cullet samples were subjected to three different surface treatments. These were applied during de-aggregation (300 s on a laboratory scale mill). The results are shown in Table 8.

**Table 8**

| Treatment | d₉₀ 0days | d₉₀ |
|---|---|---|
| 1.5um Cullet - untreated - exposed to air | 3.75 | 18.1 |
| 1.5um Cullet - untreated - stored in closed container | 3.75 | 18.1 |
| 1.5um Cullet - untreated - stored in vacuum oven @50°C | 3.75 | 17.8 |
| 1.5um Cullet - 0.5wt% Amino-silane - exposed to air | 3.58 | 3.58 |
| 1.5um Cullet - 1.0wt% Amino-silane - exposed to air | 3.80 | 3.94 |
| 1.5um Cullet - 0.5wt% AMP95 - exposed to air | 3.75 | 3.75 |
| 1.5um Cullet - 1.0wt% AMP95 - exposed to air | 3.92 | 3.86 |
| 1.5um Cullet - 1.0wt% TEA - exposed to air | 3.86 | 3.85 |

The 7 *µ*m and 3 *µ*m cullet samples were compounded into LLDPE (Linear Low Density Polyethylene) masterbatch (30 *µ*m LLDPE film). Formulation details were as follows:
- Polymer: 90:10 blend of Innovex LL6208F and Exxon Mobil LD100BW
- Slip aid: Erucamide at 1:2 ratio with fillers
- Process aid: 100 ppm AMF 705
- (Slip and process aids added in 5 wt. % masterbatches in LLDPE)
- 1000, 2000 and 3000 ppm of antiblock comprising 7 *µ*m cullet (Antiblock A) and 3 *µ*m cullet (Antiblock B)

Film processing details were as follows:
- Film blown using a Collin 180/30 extruder, with a 60 mm die diameter and 0.8 mm die gap, at 30 *µ*m gauge
- Temperature profile: 240°C at the die: 240, 240 240, 240, 235, 220, 190°C in the barrel
- Screw speed: 56 rpm
- Blow Up Ratio 1:2.5
- Haul off: 10 m min⁻¹
- Layflat: 225 mm
- Samples conditioned at 20°C 50% RH for minimum of 48 hours before testing

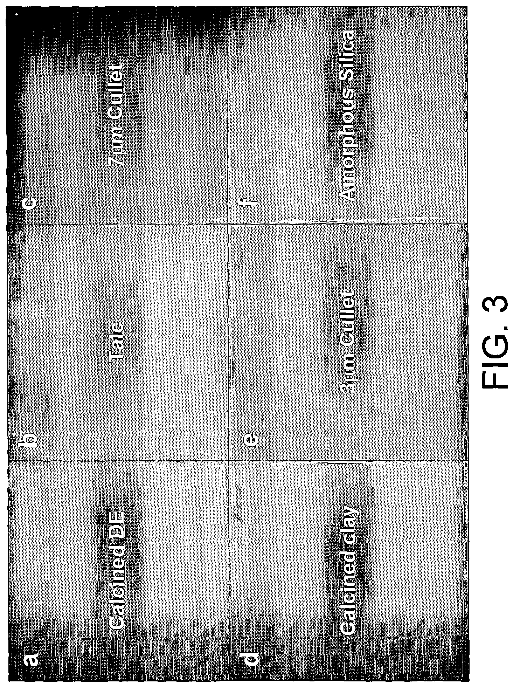

Colour data for the masterbatch (MB) plaques are given in Table 9. Photographs of the filled plastics are shown in Figures 3a to3f.

**Table 9**

| Sample | Filler Load(wt%) | Colour of MB plaques | | |
|---|---|---|---|---|
| | | L* | a* | b* |
| 7µm Cullet | 10.0 | 71.53 | -1.22 | 6.42 |
| 3µm Cullet | 11.0 | 73.47 | -0.42 | 13.42 |
| Calcined Clay | 10.2 | 74.01 | 2.76 | 12.6 |
| Calcined DE | 9.9 | 77.05 | -0.19 | 8.53 |
| Talc | 10.5 | 73.73 | 0.28 | 8.28 |
| Amorphous Silica | 11.2 | 75.71 | 2.86 | 17.16 |

Both cullet samples have similar colour performance in LLDPE masterbatch to the commercial materials. The 7 *µ*m cullet's low yellowness is an important asset when selling anitblock masterbatch, as it reduces the "dirty" appearance of the film once reeled.

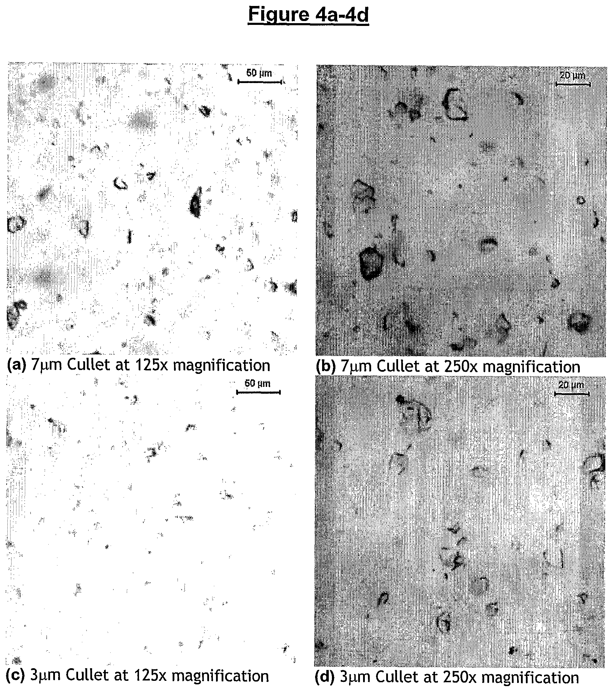

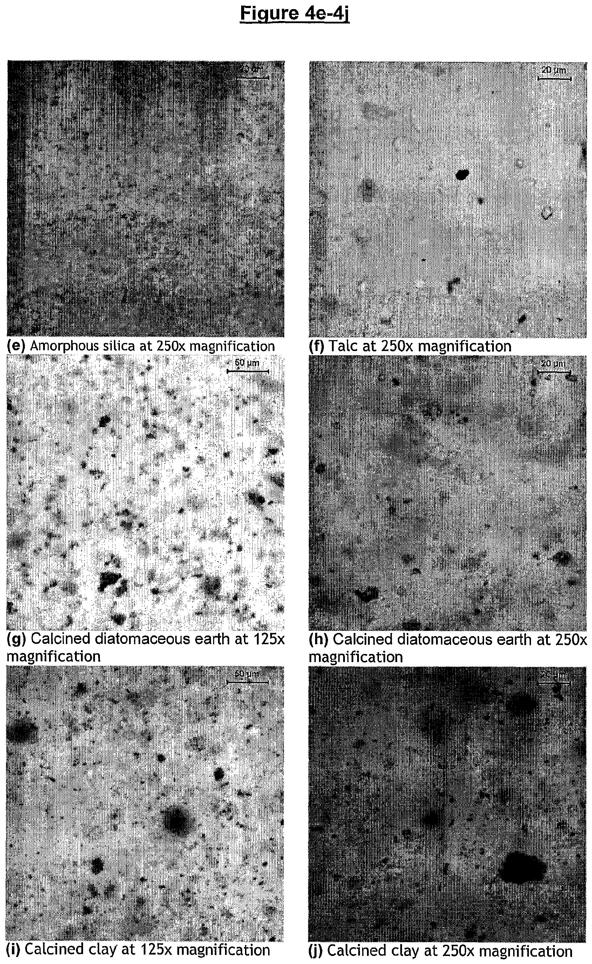

Dispersion of the cullet/masterbatch samples were analysed under transmitted light under alight microscope. In each case, a small amount of the cullet/masterbatch was pressed between two sheets of Melinex film in a heated hydraulic press to form a transparent but relatively thick film (approximately 100 *µ*m). The pictures are shown in Figure 4.

Both the 7 *µ*m and 3 *µ*m cullet samples show good dispersion in LLDPE masterbatch. Some difficulty was experienced in obtaining clear images of the cullets resulting from the close refractive index match with the polymer. This however should result in good low haze performance in blown film.

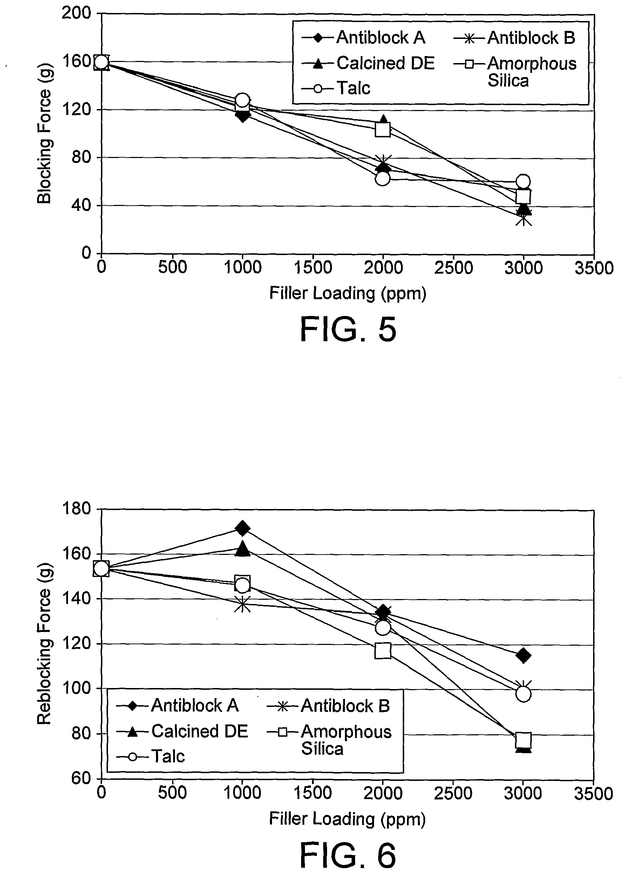

The blocking force for each of the samples are shown in Figure 5, and was determined according to ASTM D3354-89. Figure 5 illustrates that the two novel antiblock materials provide equivalent antiblocking performance to the commercial materials at the tested loading levels.

The reblocking force for each of the samples are shown in Figure 6, and was determined according to ASTM D3354-89. Figure 6 illustrates that the novel antiblock material "Antiblock B" provides equivalent reblocking performance to the commercial materials tested at all of the loading levels presented here. The novel antiblock material "Antiblock A" provides slightly poorer reblocking performance to some of the commercial materials tested, but similar performance to the Celite 263LD sample, at the tested loading levels.

The film-to-film coefficient of friction of each of the samples are shown in Figure 7, and was determined according to ASTM D1894-90. Figure 7 illustrates that the two novel antiblock materials provide comparable Dynamic Coefficient of Friction performance to the commercial materials tested at the tested loading levels.

The haze and clarity of each of the samples are shown in Figure 8 and Figure 9 respectively. Figure 6 illustrates that both novel antiblock materials provide comparable haze performance to the commercial materials at load levels up to 2000ppm. The novel antiblock material "Antiblock B" provides better Haze performance than the commercial materials at load levels in excess of 2000ppm. The novel antiblock material "Antiblock A" provides similar Haze performance to the commercial materials at load levels up to 2000ppm, and that both provide better performance than the Sylobloc 45 sample at load levels in excess of 2000ppm.

Figure 9 illustrates that both novel antiblock materials provide equivalent clarity performance to Polybloc talc, and better clarity performance than the other commercial materials, at tested load levels. Both novel antiblock materials provide better performance than the Sylobloc 45 sample at load levels up to 3000ppm.

The present invention has been described broadly and without limitation to specific embodiments. Variations and modifications as will be readily apparent to those of ordinary skill on this art are intended to be included within the scope of this application and subsequent patent(s).

### Appendix - 'Brightness' Test Method

### Definitions

Brightness is the percentage of light reflected by a body compared to that reflected by a perfectly reflecting diffuser measured at a nominal wavelength of 457 nm with a Datacolor Elrepho or similar instrument such as the Carl Zeiss Photoelectric Reflection Photometer (Elrepho).

Yellowness is the difference between the percentage of the light reflected by a body compared to that reflected by a perfectly reflecting diffuser measured at a nominal wavelength of 571 nm and the brightness defined above.

### Scope

A test surface is produced by pulverising a dried material to disperse it completely then compressing it under fixed conditions to form a powder tablet. The reflectance values of this tablet are measured at two wavelengths in the visible spectrum. Additional reflectance values may be measured at other wavelengths when required and can be used to calculate the tristimulus values or other functions. The spectrophotometer incorporates a gloss shield and the measurements are made with the ultraviolet component excluded.

### Standards

The primary standard adopted in this method is an ISO level 2 reflectance standard supplied and calibrated by Physikalisch-Technische Bundesanstalt (P.T.B.) Germany. (ISO appointed primary calibration laboratory.).

A 'working standard' is used to calibrate the photometer for routine brightness measurements. This may be a ceramic tile which has been calibrated previously against the current level 2 standard.

### Apparatus

Elrepho Datacolor, or Carl Zeiss Photoelectric Reflection Photometer (Elrepho) fitted with two tungsten lamps, a gloss shield and a range of filters, including one at a nominal setting of 457 nm and one at a nominal setting of 571 nm.

Drying oven, forced circulation type, capable of maintaining a temperature of 80 °C to within 5 °C.

Pulveriser and sample bowls.

Tablet forming equipment, comprising of a cylinder, piston, press, measuring cup, forming rings and ring holder. The press is designed to exert a pressure of 1.2 kg cm⁻² upon the tablet surface.

Plate glass, approximately 100 mm x 80 mm x 5 mm.

Metal polish (for cleaning the plate glass).

Balance capable of weighing 20 g to within 0.1 g.

Miscellaneous: sample dishes, small brush, duster, palette knife, sealed container.

### Preparation of powder tablet

20 g of the sample is transferred to a sample dish and placed in the oven for between 15 and 30 minutes or until dry. Dryness is denoted by the absence of condensation on a piece of cool plate glass when it is placed in close proximity to the surface of the sample which has just been removed from the oven.

The dish is removed from the oven and allowed to cool.
10 g of test sample is pulverise for 30 seconds (if a pulveriser is not available a substitute mill may be used providing it has a rotational shaft speed of at least 20,000 r.p.m). In addition, a series of milling sessions are carried out to determine the conditions that provide maximum dispersion. This state is denoted when the brightness gain after successive millings does not exceed 0.1 % reflectance unit.

Transfer the sample from the Pulveriser into an empty dish. Place the tablet-forming ring, numbered side facing downwards, onto the clean glass. Place the cylinder onto the ring.

Measure out approximately 20 ml of test sample using the measuring cup. NOTE: If the bulk density of the material is such that the volume of 10 g of the pulverised test sample is less than 20 ml then use all of it. Pour the sample into the cylinder and level it. Lower the piston gently onto the sample.

Position the glass supporting the piston in such a manner, that when the lever of the press is lowered, the spigot engages the dimple in the centre of the piston. Lower the lever press gently onto the piston and allow the lever to rest there under its own weight for 20 seconds. Do not apply additional pressure. Raise the lever and remove the piston and cylinder. Remove the ring containing the powder tablet.

### Measurement of brightness and yellowness

The standard instrument for reflectance is the Datacolor (2000 or 3000). The instrument is PC driven and is programmed to follow the manufacturer's instructions to determine the functions required. These instructions are controlled locally and displayed within the vicinity of the instrument.

Operating instructions for the Zeiss Elrepho are as follows:
1. Select the filter control position 12 and zero the meter.
2. Select filter 457 nm (filter position number 8).
3. Place the working standard into the ring holder and place it on the springloaded pedestal. Unlock the pedestal and allow it to present the standard to the measuring aperture.
4. Set the graduated drum to the value assigned to the standard.
5. Balance the indicator with the neutral wedge control operated in conjunction with the sensitivity key.
6. Lower the pedestal, remove the standard from the ring holder, replace it with the test sample and allow the pedestal to present the test sample to the measuring aperture.
7. Balance the indicator by rotating the graduated drum operated in conjunction with the sensitivity key.
8. Record the reading on the graduated drum to within 0.1 reflectance unit. Remove the test sample.
9. Select filter 571 nm (filter position number 3).
10. Repeat 3 to 8. If the subsequent measurement of the working standard deviates by more than 0.1 reflectance unit from the previous measurement, recalibrate the instrument and repeat the batch of measurements.
11. If reflectance values at other wavelengths are required, select the appropriate filter and repeat 3 to 8 using the appropriate standard value in 4.

### Expression of results

Brightness is reported as the percentage reflectance of 457 nm (violet) and is reported as read from the instrument. The yellowness is reported as the value obtained when the reflectance at 457 nm is subtracted from the reflectance at 571 nm. Reflectance values at other wavelengths are reported as the percentage reflectance corresponding to the function required.

### Precision

The standard deviation for reflectance measurements is 0.2.

### Equipment check and calibration

This is controlled locally and is ISO9001(2000) compliant.

### Equipment suppliers

Datacolor International, 6 St. George's Court, Dairyhouse Lane, Broadheath, Altrincham, Cheshire, WA14 5UA, England.

## Claims

1. Use of a particulate glass cullet having a d₅₀ of less than 7 µm and a brightness greater than 80% in a polymer composition as an anti-blocking pigment, wherein the glass cullet is a soda-lime glass cullet comprising from 60-75 wt% silica, from 12 to 18 wt% soda and from 5 to 12 wt% lime, wherein brightness is defined as the percentage of light reflected by a body compared to that reflected by a perfectly reflecting diffuser measured at a nominal wavelength of 457 nm with a Datacolour Elrepho or similar instrument, and wherein the d₅₀ is measured by sedimentation of the particles in a fully dispersed state in an aqueous medium using a SEDIGRAPH 5100 machine as supplied by Micromeritics Corporation, USA.

2. Use according to claim 1, wherein the particulate glass comprises less than 5 wt% boric acid.

3. Use according to claim 1 or 2, wherein the particulate cullet has a d₅₀ of less than 3 µm.

4. Use according to any one of claims 1 to 3, wherein the particulate cullet has a d₅₀ of less than 2 µm.

5. Use according to any one of claims 1-4, wherein the brightness is greater than 81%.

6. Use according to any one of claims 1-4, wherein the brightness is greater than 83%.

7. Use according to any one of claims 1-4, wherein the brightness is greater than 85%.

8. Use according to any one of claims 1-4, wherein the brightness is greater than 89%.

9. Use according to any one of claims 1-4, wherein the brightness is greater than 91%.

10. Use according to any one of claims 1-4, wherein the brightness is greater than 93%.

11. Use according to any one of claims 1 to 10, wherein the surface area of the particulate cullet is greater than 0.25 m² g⁻¹, as measured using the BET nitrogen adsorption method.

12. Use according to any one of claims 1 to 10, wherein the surface area of the particulate cullet is less than 20 m² g⁻¹, as measured using the BET nitrogen adsorption method.

13. Use according to any preceding claims, wherein the particulate cullet has a d₉₀ of less than 10 µm.

14. Use according to any one of claims 1-13, wherein the polymer composition comprises a polymer selected from the group consisting of polyethylene, polypropylene, nylon, natural rubber, SBR rubber, silicone rubber and polyesters.

## Patentansprüche

1. Verwendung von partikelförmigem Glasbruch mit einem d₅₀ von weniger als 7 µm und einer Helligkeit von mehr als 80 % in einer Polymerzusammensetzung als Antiblockier-Pigment, wobei der Glasbruch ein Natronkalkglasbruch ist, der 60 bis 75 Gew.-% Siliciumdioxid, 12 bis 18 Gew.-% Natron und 5 bis 12 Gew.-% Kalk umfasst, wobei die Helligkeit definiert wird als Prozentsatz des durch einen Körper reflektierten Lichts im Vergleich zu jenem, das durch einen perfekt reflektierenden Streukörper reflektiert wird, gemessen bei einer nominalen Wellenlänge von 457 nm mit einem Datacolour Elrepho oder einem ähnlichen Instrument, und wobei der d₅₀ gemessen wird durch Absetzung der Partikel in einem vollständig dispergierten Zustand in einem wässrigen Medium mithilfe einer SEDIGRAPH-5100-Maschine, wie sie durch Micromeritics Corporation, USA, bereitgestellt wird.

2. Verwendung nach Anspruch 1, wobei das partikelförmige Glas weniger als 5 Gew.-% Borsäure umfasst.

3. Verwendung nach Anspruch 1 oder 2, wobei der partikelförmige Bruch einen d₅₀ von weniger als 3 µm aufweist.

4. Verwendung nach einem der Ansprüche 1 bis 3, wobei der partikelförmige Bruch einen d₅₀ von weniger als 2 µm aufweist.

5. Verwendung nach einem der Ansprüche 1 bis 4, wobei die Helligkeit mehr als 81 % beträgt.

6. Verwendung nach einem der Ansprüche 1 bis 4, wobei die Helligkeit mehr als 83 % beträgt.

7. Verwendung nach einem der Ansprüche 1 bis 4, wobei die Helligkeit mehr als 85 % beträgt.

8. Verwendung nach einem der Ansprüche 1 bis 4, wobei die Helligkeit mehr als 89 % beträgt.

9. Verwendung nach einem der Ansprüche 1 bis 4, wobei die Helligkeit mehr als 91 % beträgt.

10. Verwendung nach einem der Ansprüche 1 bis 4, wobei die Helligkeit mehr als 93 % beträgt.

11. Verwendung nach einem der Ansprüche 1 bis 10, wobei die Oberfläche des partikelförmigen Bruchs, gemessen durch das BET-Stickstoffadsorptionsverfahren, größer als 0,25 m² g⁻¹ ist.

12. Verwendung nach einem der Ansprüche 1 bis 10, wobei die Oberfläche des partikelförmigen Bruchs, gemessen durch das BET-Stickstoffadsorptionsverfahren, kleiner als 20 m² g⁻¹ ist.

13. Verwendung nach einem der vorhergehenden Ansprüche, wobei der partikelförmige Bruch einen d₉₀ von weniger als 10 µm aufweist.

14. Verwendung nach einem der Ansprüche 1 bis 13, wobei die Polymerzusammensetzung ein Polymer umfasst, das aus der Gruppe ausgewählt ist, die aus Polyethylen, Polypropylen, Nylon, Naturkautschuk, SBR-Kautschuk, Silikonkautschuk und Polyestern besteht.

## Revendications

1. Utilisation d'un calcin de verre particulaire ayant un d₅₀ inférieur à 7 µm et une luminosité supérieure à 80 % dans une composition de polymère comme pigment anti-bloquant, dans lequel le calcin de verre est un calcin de verre sodocalcique comprenant de 60 à 75 % en poids de silice, de 12 à 18 % en poids de soude et de 5 à 12 % en poids de chaux, dans lequel la luminosité est définie comme le pourcentage de lumière réfléchie par un corps comparé à celui reflété par un diffuseur parfaitement réfléchissant mesuré à une longueur d'onde nominale de 457 nm avec un Datacolour Elrepho ou un instrument similaire, et dans lequel le d₅₀ est mesuré par sédimentation des particules dans un état totalement dispersé dans un milieu aqueux en utilisant une machine SEDIGRAPH 5100 telle que fournie par l'entreprise Micromeritics Corporation, aux États-Unis.

2. Utilisation selon la revendication 1, dans laquelle le verre particulaire comprend moins de 5 % en poids d'acide borique.

3. Utilisation selon la revendication 1 ou 2, dans laquelle le calcin particulaire a un d₅₀ inférieur à 3 µm.

4. Utilisation selon l'une quelconque des revendications 1 à 3, dans laquelle le calcin particulaire a un d₅₀ inférieur à 2 µm.

5. Utilisation selon l'une quelconque des revendications 1 à 4, dans laquelle la luminosité est supérieure à 81 %.

6. Utilisation selon l'une quelconque des revendications 1 à 4, dans laquelle la luminosité est supérieure à 83 %.

7. Utilisation selon l'une quelconque des revendications 1 à 4, dans laquelle la luminosité est supérieure à 85 %.

8. Utilisation selon l'une quelconque des revendications 1 à 4, dans laquelle la luminosité est supérieure à 89 %.

9. Utilisation selon l'une quelconque des revendications 1 à 4, dans laquelle la luminosité est supérieure à 91 %.

10. Utilisation selon l'une quelconque des revendications 1 à 4, dans laquelle la luminosité est supérieure à 93 %.

11. Utilisation selon l'une quelconque des revendications 1 à 10, dans laquelle l'aire de la surface du calcin particulaire est supérieure à 0,25 m² g⁻¹ telle que mesurée en utilisant le procédé BET d'adsorption d'azote.

12. Utilisation selon l'une quelconque des revendications 1 à 10, dans laquelle l'aire de la surface du calcin particulaire est inférieure à 20 m² g⁻¹ telle que mesurée en utilisant le procédé BET d'adsorption d'azote.

13. Utilisation selon l'une quelconque des revendications précédentes, dans laquelle le calcin particulaire a un d₉₀ inférieur à 10 µm.

14. Utilisation selon l'une quelconque des revendications 1 à 13, dans laquelle la composition de polymère comprend un polymère choisi dans le groupe constitué par le polyéthylène, le polypropylène, le nylon, le caoutchouc naturel, le caoutchouc SBR, le caoutchouc de silicone et les polyesters.
